# EUROPÄISCHE PATENTSCHRIFT

(11) **EP 3 122 612 B1**
(45) Veröffentlichungstag und Bekanntmachung des Hinweises auf die Patenterteilung: **28.02.2018**
(21) Anmeldenummer: 15712567.5
(22) Anmeldetag: 18.03.2015
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION DESTINÉE À UN VÉHICULE AUTOMOBILE

(30) Priorität: 28.03.2014 DE 102014104350
(43) Veröffentlichungstag der Anmeldung: 01.02.2017
(73) Patentinhaber: ThyssenKrupp Presta AG, 9492 Eschen (LI); thyssenkrupp AG, 45143 Essen (DE)
(72) Erfinder: PÖTZL, Fabian, 80807 München (DE)
(74) Vertreter: thyssenkrupp Intellectual Property GmbH
(86) Internationale Anmeldenummer: PCT/EP2015/055670
(87) Internationale Veröffentlichungsnummer: WO 2015/144522

(56) Entgegenhaltungen:
- US-A1- 2013 319 161

## Beschreibung

### Technisches Gebiet

Die vorliegende Erfindung betrifft eine Lenksäule für ein Kraftfahrzeug, welche einen Montageträger mit mindestens einem offenen Langloch und mindestens einer in dem offenen Langloch angeordnete Gleitkapsel zum Festlegen des Montageträgers am Chassis des Kraftfahrzeuges umfasst.

### Stand der Technik

Im Bereich von Lenksäulen für Kraftfahrzeuge sind unterschiedliche Systeme zur Absorption von Crash-Energie bekannt. So sind beispielsweise teleskopierbare Lenksäulen bekannt, bei welchen eine mit dem Chassis des Kraftfahrzeugs verbindbare Trageinheit und eine an der Trageinheit gehaltener Verschiebeeinheit vorgesehen sind, wobei die Verschiebeeinheit gegenüber der Trageinheit verschiebbar angeordnet ist, um im Crashfall durch eine entsprechende Verschiebung der Verschiebeeinheit gegenüber der mit dem Chassis verbundenen Trageinheit eine Nachgiebigkeit des Lenkrades bereitzustellen. Bei der Verschiebung der Verschiebeeinheit gegenüber der Trageinheit kann über ein Energieabsorptionselement Crash-Energie absorbiert werden. Unterschiedliche Energieabsorptionselemente sind hier bekannt, beispielsweise in Form von Biegelaschen, Biegedrähten, Biegereißlaschen oder Crash-Sicken, nur um einige Möglichkeiten zu nennen.

Ein alternatives Konzept zur Verbesserung des Crash-Verhaltens einer Lenksäule umfasst einen Montageträger, an welchem die Lenkspindel in einem Mantelrohr oder einem Führungskasten drehbar gehalten ist. Der Montageträger ist über Gleitkapseln am Chassis des Kraftfahrzeuges festgelegt, wobei die Gleitkapseln in offenen Langlöchern geführt sind. Im Crashfall verschiebt sich der Montageträger mitsamt den daran aufgenommenen weiteren Komponenten der Lenksäule gegenüber den fest am Chassis des Kraftfahrzeugs festgelegten Gleitkapseln entlang der offenen Langlöcher. Ist das offene Langloch in einer entgegen der vorgesehenen Fahrzeugbewegungsrichtung offen ausgebildet, so rutscht der Montageträger nach Durchlaufen des durch das offene Langloch vorgegebenen Verschiebeweges aus der durch die Gleitkapseln gebildeten Halterung heraus und bewegt sich danach frei oder auch durch separate Führungsvorrichtungen geführt weiter. Die Gleitkapseln stellen dabei ein vorgegebenes Losbrechniveau bereit, welches überwunden werden muss, um eine Verschiebung des Montageträgers gegenüber den Gleitkapseln zu erlauben. Im Crashfall erfolgt dann aufgrund der Krafteinleitung in die Lenksäule eine Relativbewegung zwischen dem Montageträger mit der Lenksäule und der am Fahrzeug fixierten Gleitkapseln. Der Montageträger gleitet entsprechend aus den Gleitkapseln heraus, wenn die vorbestimmte Losbrechkraft überschritten wurde.

Aus der EP 1 602 551 A1 ist beispielsweise eine Lenksäule mit Gleitkapseln bekannt, welche mittels eines verformbaren Ringes beziehungsweise einer Wellscheibe an dem Montageträger unverlierbar vorfixiert werden, und dann bei der eigentlichen Montage der Lenksäule an dem Chassis des Kraftfahrzeuges über das Anzugsmoment der die jeweilige Gleitkapsel am Chassis des Kraftfahrzeugs befestigenden Schraube bezüglich ihrer Klemmkraft und damit auch bezüglich der Losbrechkraft eingestellt werden. Entsprechend muss ein genau vorgegebenes Anzugsmoment der jeweiligen die Gleithülsen am Chassis des Kraftfahrzeugs befestigenden Schraube vorgegeben werden, um eine definierte Losbrechkraft bereitzustellen.

In der US 2013/319161 A1 ist eine Lenksäule beschrieben, bei welcher der Montageträger an der Gleitkapsel mittels einer Mutter mit Innengewinde gehalten ist, die auf ein Gewinde des zylindrischen Abschnitts aufgeschraubt ist. Die Einstellung einer definierten Klemmbeziehungsweise Losbrechkraft erfordert ebenfalls ein genau vorgegebenes Anzugsmoment der besagten Mutter, so dass eine definierte Losbrechkraft nur schwer vorgegeben werden kann.

### Darstellung der Erfindung

Ausgehend von dem bekannten Stand der Technik ist es eine Aufgabe der vorliegenden Erfindung, eine Lenksäule für ein Kraftfahrzeug anzugeben, bei welcher die Losbrechkraft der Gleitkapsel der montierten Lenksäule noch zuverlässiger einstellbar ist.

Diese Aufgabe wird durch eine Lenksäule mit den Merkmalen des Anspruchs 1 gelöst. Vorteilhafte Weiterbildungen ergeben sich aus den Unteransprüchen

Entsprechend wird eine Lenksäule für ein Kraftfahrzeug vorgeschlagen, umfassend einen Montageträger mit mindestens einem offenen Langloch und mindestens einer in dem offenen Langloch angeordneten, am Chassis des Kraftfahrzeugs festlegbaren Gleitkapsel zum Halten des Montageträgers, wobei der Montageträger im Crashfall relativ zu der am Chassis des Kraftfahrzeugs festgelegten Gleitkapsel bewegbar ist und wobei die Gleitkapsel einen zylindrischen Abschnitt aufweist, der sich durch das offene Langloch hindurch erstreckt. Erfindungsgemäß ist der Montageträger an der Gleitkapsel mittels eines auf den zylindrischen Abschnitt aufgepressten Halterings gehalten. Unter zylindrischem Abschnitt ist im Sinne der Erfindung jedes zylindrische Profil zu verstehen. Es kann sich also um einen Zylinder mit einer quadratischen, rechteckförmigen oder sonstigen polygonförmigen, sowie um einen Zylinder mit einer elliptischen Grundfläche handeln. Bevorzugt ist der zylindrische Abschnitt jedoch als Kreiszylinder (=Zylinder mit kreisförmiger Grundfläche) oder ein Rechteckzylinder (=Zylinder mit rechteckiger Grundfläche) oder ein Quadratzylinder (=Zylinder mit quadratischer Grundfläche) ausgebildet.

Dadurch, dass die Gleitkapsel an dem Montageträger mittels eines auf dem zylindrischen Abschnitt aufgepressten Halterings gehalten ist, kann über die Aufpresskraft des Halterings eine vorgegebene Klemmkraft, mit welcher der Montageträger an der Gleitkapsel gehalten wird und damit auch eine vorgegebene Losbrechkraft definiert vorgegeben werden.

Auf diese Weise ist es entsprechend möglich, die Losbrechkraft der Gleitkapsel unabhängig von der eigentlichen Montage des Montageträgers an dem Chassis des Kraftfahrzeugs einzustellen, da die Gleitkapsel mit dem Montageträger nur über den auf den zylindrischen Abschnitt aufgepressten Haltering gehalten ist. So kann auf das zusätzliche Aufbringen einer Vorspannung über das Aufbringen eines definierten Anzugsmoments auf eine die Gleitkapsel am Chassis festlegende Schraube verzichtet werden. Vielmehr ist die Klemmkraft, mit der die Gleitkapsel und der Haltering den Montageträger halten und damit auch die Losbrechkraft der Gleitkapsel aus dem offenen Langloch unabhängig von dem jeweiligen Anzugsmoment der die Gleitkapsel festlegenden Schraube.

Um eine möglichst definierte Losbrechkraft bereit zu stellen, ist der Haltering bevorzugt mit einer vorgegebenen Aufpresskraft auf den zylindrischen Abschnitt aufgepresst. Über das Bereitstellen der vorgegebenen Aufpresskraft kann eine definierte Klemmkraft auf den Montageträger ausgeübt werden, welche entsprechend die Losbrechkraft bestimmt. Die Losbrechkraft ist dabei unabhängig von der eigentlichen Montage der Lenksäule und im Wesentlichen nur abhängig von der Aufpresskraft.

Eine noch weitere Entkopplung der Losbrechkraft der Lenksäule von der eigentlichen Montagesituation wird darüber erreicht, dass der Haltering auf der dem Chassis abgewendeten Seite des Montageträgers auf den zylindrischen Abschnitt der Gleitkapsel aufgepresst ist. Dadurch findet auch kein unbeabsichtigtes Verklemmen des Halterings oder ein Erhöhen des Anpressdrucks des Halterings an die Gleitkapsel beim Montieren statt. Der Haltering ist dabei typischerweise auf der unteren Seite des Montageträgers angeordnet. Denkbar und möglich ist es jedoch auch, den Haltering auf der Oberseite des Montageträgers anzuordnen. Das aus dem Stand der Technik bekannte Aufbringen eines vorgegebenen Anzugsmoments bei der Montage entfällt entsprechend. Ein Anbindungsabschnitt der Gleitkapsel ist entsprechend auf der Oberseite des Montageträgers angeordnet und ermöglicht so eine direkte Anbindung an das Chassis. Das Anzugsmoment der die Gleitkapsel am Chassis festlegenden Schraube wird so gänzlich über die Gleitkapsel selbst abgetragen, ein Einfluss auf den Haltering besteht nicht. Damit ist die Losbrechkraft unabhängig vom Anzugsmoment der Schraube.

Zwischen dem Haltering und dem Montageträger ist bevorzugt eine Unterlegscheibe angeordnet, so dass ein definiertes Reibverhalten zwischen der Gleitkapsel und der Unterlegscheibe bereitgestellt werden kann, welches unabhängig von der jeweiligen Verformung und Kontur des Halterings ist. In alternativen Ausführungsformen kann anstelle der Unterlegscheibe auch ein Federelement und/oder ein Blechstreifen angeordnet sein. Der so angeordnete Blechstreifen kann direkt als Energieabsorptionsmittel, beispielsweise in Form eines Biegestreifens oder einer Biegereißlasche ausgebildet sein.

Der Haltering stellt eine definierte Losbrechkraft des Montageträgers gegenüber der Gleitkapsel bereit. Mit anderen Worten kann durch das Aufpressen des Halteringes auf den zylindrischen Abschnitt der Gleitkapsel eine definierte Haltekraft beziehungsweise Losbrechkraft eingestellt werden.

Der zylindrische Abschnitt der Gleitkapsel weist bevorzugt eine axiale Erstreckung auf, welche größer ist als Kombination aus der Materialstärke des Montageträgers und der axialen Höhe des Halterings und, bei Vorliegen einer Unterlegscheibe, auch der Materialstärke der Unterlegscheibe. Mit anderen Worten steht der zylindrische Abschnitt im montierten Zustand über das äußerste Ende des Halterings hinaus, derart, dass dort eine, die Gleitkapsel am Chassis des Kraftfahrzeugs festlegende Schraube beziehungsweise deren Kopf angreifen kann, ohne die Klemmkraft zwischen Kragenabschnitt der Gleitkapsel und dem Haltering zu beeinflussen.

In einer weiteren bevorzugten Ausgestaltung ist zwischen einem unteren Ende des zylindrischen Abschnitts und dem Haltering eine freie Höhe des zylindrischen Abschnitts vorgesehen, welche nicht mit weiteren Bauteilen belegt ist. So kann eine Interaktion des Halterings mit einer bei der Montage die Gleitkapsel am Chassis befestigenden Schraube sicher vermieden werden, so dass die Losbrechkraft des Montageträgers gegenüber der Gleitkapsel ausschließlich über die Aufpresskraft beim Aufpressen des Halterings vorgegeben werden kann.

In einer bevorzugten Weiterbildung weist die Gleitkapsel einen Kragenabschnitt auf, welcher auf der dem Chassis zugewendeten Seite des Montageträgers zur Anbindung der Gleitkapsel am Chassis des Kraftfahrzeuges angeordnet ist und zwischen einer Unterseite des Kragenabschnitts und dem Haltering eine Klemmkraft auf den Montageträger ausgeübt wird, welche die Losbrechkraft bestimmt.

Bevorzugt ist auf der Gleitkapsel eine Beschichtung ausgebildet, um ein definiertes Gleitverhalten und ein reduziertes Korrosionsverhalten der Gleitkapsel bereitzustellen.

Die oben genannte Aufgabe wird weiterhin durch ein Verfahren zur Herstellung einer Lenksäule mit den Merkmalen des Anspruchs 10 gelöst.

Entsprechend wird ein Verfahren zur Herstellung einer Lenksäule vorgeschlagen. Erfindungsgemäß wird ein zylindrischer Abschnitt einer Gleitkapsel in einem offenen Langloch eines Montageträgers angeordnet und ein Haltering wird mit einer vorbestimmten Aufpresskraft auf den zylindrischen Teil der Gleitkapsel aufgepresst.

Dadurch, dass der Haltering mit einer vorbestimmten Aufpresskraft aufgepresst wird, kann ein Halten der Gleitkapsel an dem Montageträger mit einer definierten Losbrechkraft erreicht werden. Die Losbrechkraft ist dabei nur über die Aufpresskraft des Halteringes einstellbar, und ist unabhängig von einem etwaigen Anzugsmoment einer die Gleitkapsel am Chassis des Kraftfahrzeugs haltenden Schraube.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Darstellung einer Lenksäule in einem ersten Ausführungsbeispiel;
- Figur 2: eine schematische perspektivische Darstellung eines Montageträgers der Lenksäule aus Figur 1;
- Figur 3: eine Gleitkapsel mit einer Unterlegscheibe und einem Haltering in einer auseinandergezogenen, perspektivischen Darstellung;
- Figur 4: eine schematische perspektivische Darstellung der Herstellung der Lenksäule;
- Figur 5: eine schematische perspektivische Darstellung einer weiteren Lenksäule;
- Figur 6: eine schematische Seitenansicht einer weiteren Lenksäule mit einem Energieabsorptionselement; und
- Figur 7: eine schematische Schnittansicht durch einen Montageträger mit eingebrachter Gleitkapsel und aufgepresstem Haltering; und
- Figur 8: eine alternative Ausführungsform der Gleitkapsel von Figur 3 mit einer quadratzylindrischen Ausbildung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

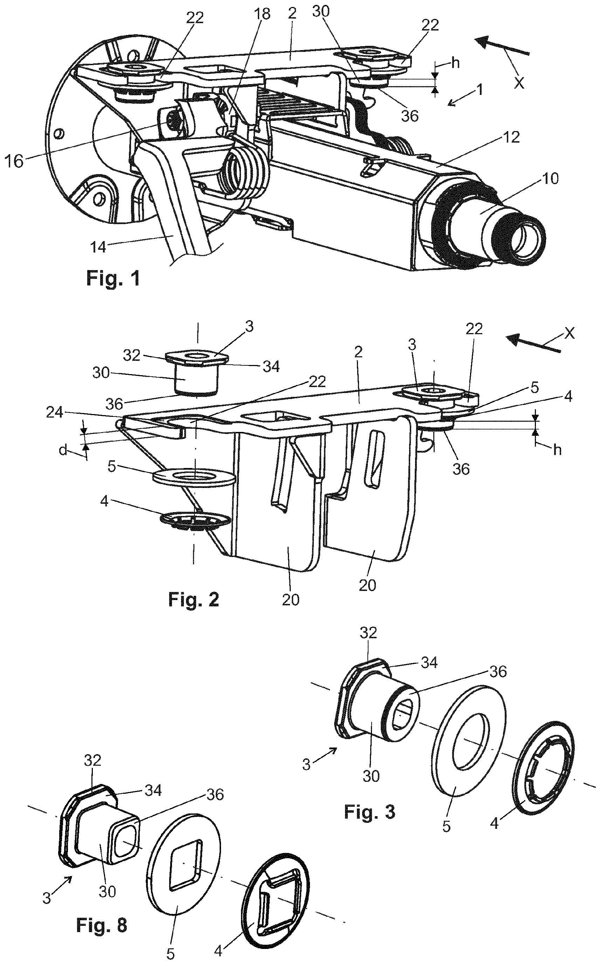

Figur 1 zeigt eine Lenksäule 1 in einer schematischen perspektivischen Darstellung. Die Lenksäule 1 weist eine Lenkspindel 10 auf, welche in an sich bekannter Weise in einem Führungskasten 12 drehbar gehalten ist, und welche zur Übertragung eines Lenkmoments von einem Lenkrad auf ein Lenkgetriebe, beispielsweise unter Zwischenschaltung einer Lenkwelle, vorgesehen ist.

Der Führungskasten 12 ist in der gezeigten Ausführungsform an einem Montageträger 2 in seiner Position veränderbar gehalten. Der Führungskasten 12 ist dabei zwischen zwei Wangen 20 des Montageträgers 2 verschwenkbar und axial entlang der Achse der Lenkspindel 10 verschiebbar angeordnet. Der Montageträger 2 ist in Figur 2 noch einmal separat und in einer schematischen perspektivischen Ansicht gezeigt, aus welcher sich die Anordnung der Wangen 20 ergibt. Über einen Spannhebel 14, welcher über einen Nockenmechanismus 18 auf eine Spannachse 16 wirkt, kann die Position der Lenksäule 1 in einer von einem Fahrer festgelegten Position verriegelt werden.

Der Montageträger 2 dient dazu, die gesamte Lenksäule 1 an das Chassis eines Kraftfahrzeuges anzubinden. Hierzu weist der Montageträger 2 zwei offene Langlöcher 22 auf, die entgegen der vorgesehenen Fahrzeugbewegungsrichtung X offen sind und über welche die Anbindung des Montageträgers 2 am Chassis des Kraftfahrzeugs erreicht wird.

Zur Anbindung des Montageträgers 2 an einen Anbindungsabschnitt am Chassis des Kraftfahrzeugs ist eine im montierten Zustand ortsfest mit dem Chassis des Kraftfahrzeugs verbundene Gleitkapsel 3 in das offene Langloch 22 eingesetzt. Die Gleitkapsel 3 weist einen zylindrischen Abschnitt 30 und einen Kragenabschnitt 32 auf. Der Kragenabschnitt 32 ist in dem gezeigten Ausführungsbeispiel auf der oberen Seite des Montageträgers 2 angeordnet, welcher im montierten Zustand auf den jeweiligen Anbindungsabschnitt am Chassis des Kraftfahrzeugs zu gerichtet ist. Entsprechend liegt der Kragenabschnitt 32 der Gleitkapsel 3 am Chassis des Kraftfahrzeugs an, wenn der Montageträger 2 im Kraftfahrzeug montiert ist.

Der zylinderförmige Abschnitt 30 erstreckt sich vom Kragenabschnitt 32 aus durch das offene Langloch 22 des Montageträgers 2 hindurch und erstreckt sich weiter auf der unteren Seite, also die dem Chassis des Kraftfahrzeugs abgewandte Seite, des Montageträgers 2. Der Montageträger 2 wird an der Gleitkapsel 3 mittels eines definiert auf den zylindrischen Abschnitt 30 der Gleitkapsel 3 aufgepressten Halterings 4 gehalten. Über den mit einer definierten Aufpresskraft aufgepressten Haltering 4 kann eine definierte Klemmkraft zwischen dem Haltering 4 und der Unterseite 34 des Kragenabschnitts 32 erreicht werden, mittels welcher der Montageträger 2 an der Gleitkapsel 3 gehalten ist.

Die Erfindung ist auch bei einer umgekehrten Ausführung anwendbar, bei der der Kragenabschnitt auf der unteren Seite des Montageträgers und der Haltering an der oberen Seite des Montageträgers angeordnet ist.

Da der Montageträger 2 mit einer definierten Klemmkraft, die sich über die definierte Aufpresskraft des Halterings 4 auf den zylindrischen Abschnitt 30 der Gleitkapsel 3 definiert, gehalten ist, kann auch eine definierte Losbrechkraft der Gleitkapsel 3 zur relativen Bewegung des Montageträgers 2 in der vorgesehenen Fahrzeugbewegungsrichtung X bereit gestellt werden. Damit kann im Crashfall die zu überwindende Losbrechkraft, nach deren Überwindung sich der Montageträger 2 entlang des offenen Langlochs 22 bewegt und schlussendlich außer Eingriff mit der Gleitkapsel 3 kommt, definiert vorgegeben werden. Die aus dem Stand der Technik bekannte Abhängigkeit der Losbrechkraft von der Montage beziehungsweise dem Anzugsmoment einer durch die Gleitkapsel 3 hindurch geführten Schraube ist damit nicht mehr gegeben. Vielmehr ist die Losbrechkraft im gezeigten Ausführungsbeispiel im Wesentlichen durch das Bereitstellen des mit einer definierten Aufpresskraft aufgepressten Halterings 4 definiert und verändert sich bei unterschiedlichen Anzugsmomenten der die Gleitkapsel 3 am Chassis des Kraftfahrzeugs festlegenden Schraube nicht.

Um in dem gezeigten Ausführungsbeispiel eine noch genauer definierte Losbrechkraft bereitzustellen, ist eine Unterlegscheibe 5 zwischen dem Haltering 4 und der Gleitkapsel 3 vorgesehen. Durch die Unterlegscheibe 5 kann eine entsprechende Flächenpressung über die Fläche der Unterlegscheibe 5 erreicht werden, die unabhängig von der geometrischen Ausprägung des Halterings 4 sowie der durch das Aufpressen bewirkten möglichen Verformung des Halterings 4 ist.

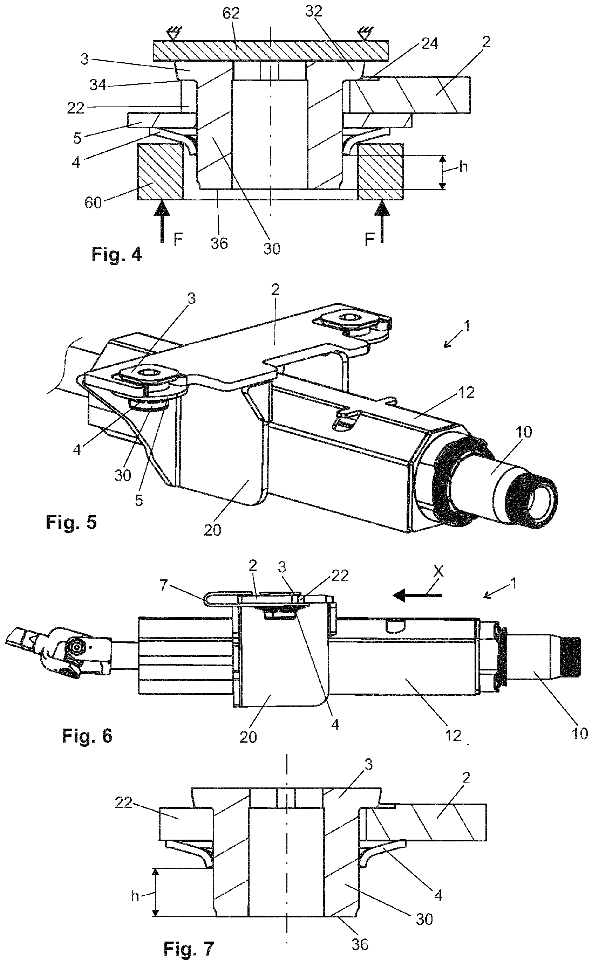

Der Haltering 4 wird kraftgesteuert auf den zylindrischen Abschnitt 30 der Gleitkapsel 3 aufgepresst. Dieses Verfahren ist prinzipiell in Figur 4 gezeigt, wobei hier in einer schematischen Darstellung zum Montieren der Gleitkapsel 3 ein Aufpresswerkzeug 60 gezeigt ist, welches eine vorbestimmte Aufpresskraft F auf den Haltering 4 aufbringt. Der Kragenabschnitt 32 der Gleitkapsel 3, welcher im montierten Zustand am Chassis des Kraftfahrzeugs anliegt, liegt hier zum definierten Aufpressen des Halterings 4 gleichzeitig an einem Amboss 62 an. Der Haltering 4 übt entsprechend eine den Kragenabschnitt 32 in Richtung des Halterings 4 vorspannende Aufpresskraft auf die Gleitkapsel 3 aus, welche für einen festen Halt der Gleitkapsel 3 an dem Montageträger 2 und insbesondere in dem offenen Langloch 22 des Montageträgers 2 bereitstellt. Der Kragenabschnitt 32 liegt dabei mit seiner Unterseite 34 auf einer Oberfläche 24 des Montageträgers 2 auf, wobei zwischen der Unterseite 34 des Kragenabschnittes 32 und der Oberfläche 24 des Montageträgers 2 entsprechend ein definiertes Reibverhalten bereitgestellt wird.

Die über die mittels des Werkzeugs 60 gegenüber dem Amboss 62 aufgebrachte Aufpresskraft F stellt entsprechend eine definierte Klemmkraft zwischen Kragenabschnitt 32 der Gleitkapsel 3 und Haltering 4 bereit, so dass bereits vor der Montage der Lenksäule 1 am Chassis des Kraftfahrzeugs definierte Einstellung der Losbrechkraft erreicht werden kann, die unabhängig von der nachfolgenden Montage ist.

Im Crashfall wird über das an der Lenkspindel 10 angebrachte Lenkrad beim Auftreffen des Oberkörpers beziehungsweise Kopfes des jeweiligen Fahrers eine Kraft in Fahrzeugbewegungsrichtung X auf den Montageträger 2 aufgebracht. Da das offene Langloch 22 entgegen der Fahrzeugbewegungsrichtung X offen ist, wird nach Überschreiten einer über die Vorspannung des Halteringes 4 bestimmten Losbrechkraft der Montageträger 2 gegenüber der Gleitkapsel 3 in Fahrzeugbewegungsrichtung X nach vorne bewegt und gleitet dann aus dem Eingriff der Gleitkapsel 3 heraus. Entsprechend findet hier ein Zurückweichen der Lenksäule 1 im Crashfall statt, wobei der Montageträger 2 der Lenksäule 1 gegenüber den am Chassis des Kraftfahrzeugs festgelegten Gleitkapsel 3 vorwärts bewegt wird und entsprechend die nach hinten offenen Langlöcher 22 nach Durchlaufen eines vorbestimmten Verschiebungsweges, welcher durch die Länge des offenen Langloches 22 bestimmt ist, außer Eingriff mit den Gleitkapseln 3 kommt.

Die Erfindung ist auch in den Fällen anwendbar, wenn die Gleitkapsel mit definierten Druckpunkten auf Druckpunkte an den Rändern des Langlochs zusammenwirkt. Hier kann bereits bei einer sehr kurzen Verschiebung, wenn die Druckpunkte nicht mehr in Kontakt stehen, die Lenksäule vom Montageträger gelöst werden. Alternativ können die Gleitflächen auch keilförmig ausgebildet sein, so dass die Spannkraft zwischen Gleitkapsel und Montageträger bereits nach wenigen Millimetern Verschiebeweg stark verringert ist, wie dies beispielsweise in der EP1077861B1 ausgeführt ist.

Wie sich beispielsweise aus dem auf der rechten Seite in Figur 2 gezeigten, montierten Zustand der Gleitkapsel 3 mit dem Haltering 4 ergibt, ist das untere Ende 36 des zylindrischen Abschnitts 30 der Gleitkapsel 3 sich über die äußerste Erstreckung des Halterings 4 heraus erstreckend ausgebildet. Mit anderen Worten erstreckt sich der zylindrische Abschnitt 30 zwischen seinem unteren Ende 36 und dem Haltering 4 über eine freie Höhe h hinweg, in welcher keine weiteren Bauteile montiert sind, so dass der zylindrische Abschnitt 30 über den Haltering 4 herausragt. Damit ist es möglich, die Gleithülse 3 beispielsweise mittels einer hier nicht gezeigten Schraube unbeweglich am Chassis eines Kraftfahrzeuges festzulegen, wobei das Anzugsmoment der jeweiligen Schraube dann keinerlei Einfluss auf die Klemmung des Montageträgers 2 zwischen Kragenabschnitt 32 und Haltering 4 hat. Die Schraube kommt nämlich nicht in Eingriff beziehungsweise in Berührung mit dem aufgepressten Haltering 4, da die axiale Höhe des zylindrischen Abschnittes 30 größer ist, als die Materialstärke d des Montageträgers 2 in Kombination mit der Materialstärke der Unterlegscheibe 5 und der Höhe des Halteringes 4 im aufgepressten Zustand.

Entsprechend steht der zylindrische Abschnitt 30 der Gleitkapsel 3 über die äußerste Ausdehnung des Halteringes 4 hinaus, derart, dass auch beim Anziehen einer entsprechenden Schraube zum Festlegen der Gleitkapsel 3 am Chassis des Kraftfahrzeugs keine Veränderung in der Haltekraft der Gleitkapsel 3 gegenüber dem Montageträger 2 stattfindet. Mit anderen Worten liegt die entsprechende Schraube zum Festlegen der Gleitkapsel 3 nicht am Haltering 4 an und kann entsprechend auch nicht auf diesen ein wirken.

Die von der Schraube ausgeübte Klemmkraft komprimiert nur die Gleitkapsel 3 selbst, hat aber keinerlei Einfluss auf die zwischen Gleitkapsel 3 und Haltering 4 auf den Montageträger 2 ausgeübte Klemmkraft. Damit ist die Losbrechkraft des Montageträgers 2 aus der Gleitkapsel 3 unabhängig von dem jeweiligen Anzugsmoment der die Gleitkapsel 3 haltenden Schraube.

Bevorzugt ist die Gleitkapsel 3 mit einer Oberflächenbeschichtung versehen, um ein vorbestimmtes Gleitverhalten beziehungsweise Reibverhalten und damit eine definierte Losbrechkraft zuverlässig bereitstellen zu können. Auf diese Weise kann auch eine Korrosion der Gleitkapsel 3 verringert beziehungsweise vermieden werden, so dass die vorbestimmte Losbrechkraft auch unter extremen Bedingungen beziehungsweise nach einer Alterung des Kraftfahrzeuges beziehungsweise der Lenksäule gehalten werden kann.

Figur 5 zeigt eine weitere Lenksäule 1 mit einem ähnlichen Aufbau wie die in den Figuren 1 und 2 gezeigte Lenksäule 1, wobei der Führungskasten 12 in dieser Lenksäule 1 in seiner Position bezüglich des Montageträgers 2 nicht verstellbar ist. Es handelt sich entsprechend um eine nicht verstellbare Lenksäule 1. Diese nicht verstellbare Lenksäule 1 ist auf die gleiche, oben beschriebene Weise mittels des Montageträgers 2 am Chassis des Kraftfahrzeugs festlegbar, derart, dass Gleitkapseln 3 über einen mit einer vorgegebenen Aufpresskraft aufgepressten Haltering 4 an der Gleitkapsel 2 gehalten sind und der zylindrische Abschnitt 30 der Gleitkapsel 3 so ausgebildet ist, dass auch beim Montieren der Gleitkapsel 3 am Chassis des Kraftfahrzeuges eine Beeinflussung der Klemmkraft zwischen dem Kragenabschnitt 32 der Gleitkapsel 3 und dem aufgepressten Haltering 4 nicht stattfindet.

In Figur 6 ist eine weitere Lenksäule 1 gezeigt, welche in ihrem prinzipiellen Aufbau der Lenksäule aus Figur 5 gleicht. Insbesondere ist der Führungskasten 12 nicht gegenüber dem Montageträger 2 in seiner Position verstellbar.

Im Crashfall wird die über die Lenkspindel 10 auf den Führungskasten 12 eingetragene Kraft auf die Wangen 20 des Montageträgers 2 übertragen, derart, dass dann nach Überschreiten einer vorgegebenen Losbrechkraft die Lenksäule 1 in Fahrzeugbewegungsrichtung X gegenüber der am Chassis des Kraftfahrzeugs festgelegten Gleitkapsel 3 nach vorne bewegt wird und entsprechend die Gleitkapsel 3 aus dem offenen Langloch 22 nach hinten auswandert.

In dem in Figur 6 gezeigten Ausführungsbeispiel ist weiterhin ein Energieabsorptionselement 7 gezeigt, welches in Form eines Biegestreifens vorgesehen ist, welcher an der Gleitkapsel 3 ebenfalls mittels des Halteringes 4 befestigt ist. Wenn der Montageträger 2 aufgrund des Eintrages einer erhöhten Kraft im Crashfall in Fahrzeugbewegungsrichtung X nach vorne bewegt wird, wird entsprechend der Montageträger 2 in das Energieabsorptionselement 7 hineingepresst, derart, dass der Biegestreifen nach und nach abgewickelt wird. Durch die entsprechende dynamische Umformung des Energieabsorptionselementes 7 findet eine Energieabsorption statt.

Anstelle des Biegestreifens als Energieabsorptionselement kann auch eine Biegereißlasche oder ein anderes Energieabsorptionsteil vorgesehen sein.

In Figur 7 ist eine schematische Schnittdarstellung durch einen Montageträger 2, welcher ein offenes Langloch 22 aufweist, in welchem eine Gleitkapsel 3 angeordnet ist, die mittels eines mit einer definierten Aufpresskraft definiert ausgepressten Halteringes 4 gehalten ist. In dem in Figur 7 gezeigten Ausführungsbeispiel ist keine Unterlegscheibe vorgesehen.

In Figur 8 ist eine alternative Ausführungsform der Gleitkapsel dargestellt, bei der der zylindrische Abschnitt 30 als Quadratzylinder ausgebildet ist. Entsprechend hat auch der Haltering 4 eine angepasste Form.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 1: Lenksäule
- 10: Lenkspindel
- 12: Führungskasten
- 14: Spannhebel
- 16: Spannachse
- 18: Nockenantrieb
- 2: Montageträger
- 20: Wange
- 22: Langloch
- 24: Oberfläche
- 3: Gleitkapsel
- 30: zylindrischer Abschnitt
- 32: Kragenabschnitt
- 34: Unterseite
- 36: unteres Ende des zylindrischen Abschnitts
- 4: Haltering
- 5: Unterlegscheibe
- 60: Aufpresswerkzeug
- 62: Amboss
- 7: Energieabsorptionselement
- X: Fahrzeugbewegungsrichtung
- d: Materialstärke des Montageträgers
- F: Aufpresskraft
- h: freie Höhe

## Patentansprüche

1. Lenksäule (1) für ein Kraftfahrzeug, umfassend einen Montageträger (2) mit mindestens einem offenen Langloch (22) und mindestens einer in dem offenen Langloch (22) angeordneten und am Chassis des Kraftfahrzeugs festlegbaren Gleitkapsel (3) zum Halten des Montageträgers (2), wobei der Montageträger (2) im Crashfall relativ zu der am Chassis des Kraftfahrzeugs festgelegten Gleitkapsel (3) bewegbar ist und wobei die Gleitkapsel (3) einen zylindrischen Abschnitt (30) aufweist, der sich durch das offene Langloch (22) hindurch erstreckt,
**dadurch gekennzeichnet, dass**
der Montageträger (2) an der Gleitkapsel (3) mittels eines auf den zylindrischen Abschnitt (30) aufgepressten Halterings (4) gehalten ist.

2. Lenksäule (1) gemäß Anspruch 1, **dadurch gekennzeichnet, dass** der Haltering (4) mit einer vorgegebenen Aufpresskraft (F) auf dem zylindrischen Abschnitt (30) aufgepresst ist.

3. Lenksäule (1) gemäß Anspruch 1 oder 2, **dadurch gekennzeichnet, dass** der Haltering (4) auf der dem Chassis abgewendeten Seite des Montageträgers (2) auf den zylindrischen Abschnitt (30) der Gleitkapsel (3) aufgepresst ist.

4. Lenksäule (1) gemäß einem der vorstehenden Ansprüche, **dadurch gekennzeichnet, dass** zwischen dem Haltering (4) und dem Montageträger (2) eine Unterlegscheibe (5) angeordnet ist.

5. Lenksäule (1) gemäß einem der vorstehenden Ansprüche, **dadurch gekennzeichnet, dass** der Haltering (4) eine definierte Losbrechkraft des Montageträgers (2) gegenüber der Gleitkapsel (3) bereitstellt.

6. Lenksäule (1) gemäß einem der vorstehenden Ansprüche, **dadurch gekennzeichnet, dass** der zylindrische Abschnitt (30) der Gleitkapsel (3) eine axiale Erstreckung aufweist, welche größer ist als eine Kombination der Materialstärke (d) des Montageträgers (2) und der axialen Höhe des aufgepressten Halterings (4) sowie, bei Vorliegen einer Unterlegscheibe (5), der Materialstärke der Unterlegscheibe (5).

7. Lenksäule (1) gemäß einem der vorstehenden Ansprüche, **dadurch gekennzeichnet, dass** zwischen einem unteren Ende (36) des zylindrischen Abschnitts (30) und dem Haltering (4) eine freie Höhe (h) des zylindrischen Abschnitts (30) vorgesehen ist, welche nicht mit weitern Bauteilen belegt ist.

8. Lenksäule (1) gemäß einem der vorstehenden Ansprüche, **dadurch gekennzeichnet, dass** die Gleitkapsel (3) einen Kragenabschnitt (32) aufweist, welcher auf der dem Chassis zugewendeten Seite des Montageträgers (2) zur Anbindung der Gleitkapsel (3) am Chassis des Kraftfahrzeuges angeordnet ist und zwischen einer Unterseite (34) des Kragenabschnitts (32) und dem Haltering (4) eine definierte Klemmkraft auf den Montageträger (2) ausgeübt wird, welche die Losbrechkraft bestimmt.

9. Lenksäule (1) gemäß einem der vorstehenden Ansprüche, **dadurch gekennzeichnet, dass** die Oberfläche der Gleitkapsel (3) mit einer Oberflächenschicht beschichtet ist oder einer besonderen Oberflächenbehandlung unterzogen wurde.

10. Verfahren zur Herstellung einer Lenksäule (1) gemäß einem der vorstehenden Ansprüche,
**dadurch gekennzeichnet, dass**
ein zylindrischer Abschnitt (30) einer Gleitkapsel (3) in einem offenen Langloch (22) eines Montageträgers (2) angeordnet wird und ein Haltering (4) mit einer vorbestimmten Aufpresskraft (F) auf den zylindrischen Teil (30) der Gleitkapsel (3) aufgepresst wird.

## Claims

1. Steering column (1) for a motor vehicle, which comprises a mounting support (2) with at least one open elongated hole (22) and at least one sliding capsule (3) arranged in the open elongated hole (22) and able to be secured on the chassis of the motor vehicle for the retaining of the mounting support (2), wherein the mounting support (2) in event of a crash can move relative to the sliding capsule (3) secured on the chassis of the motor vehicle and wherein the sliding capsule (3) has a cylindrical section (30), which extends through the open elongated hole (22),
**characterized in that**
the mounting support (2) is retained on the sliding capsule (3) by means of a retaining ring (4) pressed onto the cylindrical section (30).

2. Steering column (1) according to Claim 1, **characterized in that** the retaining ring (4) is pressed with a predetermined press-on force (F) onto the cylindrical section (30).

3. Steering column (1) according to Claim 1 or 2, **characterized in that** the retaining ring (4) is pressed onto the cylindrical section (30) of the sliding capsule (3) on the side of the mounting support (2) facing away from the chassis.

4. Steering column (1) according to one of the preceding claims, **characterized in that** a washer (5) is arranged between the retaining ring (4) and the mounting support (2).

5. Steering column (1) according to one of the preceding claims, **characterized in that** the retaining ring (4) provides a defined breakaway force of the mounting support (2) relative to the sliding capsule (3).

6. Steering column (1) according to one of the preceding claims, **characterized in that** the cylindrical section (30) of the sliding capsule (3) has an axial extension which is larger than the combination of the material thickness (d) of the mounting support (2) and the axial height of the pressed-on retaining ring (4) and, when a washer (5) is present, also the material thickness of the washer (5).

7. Steering column (1) according to one of the preceding claims, **characterized in that** between a lower end (36) of the cylindrical section (30) and the retaining ring (4) there is provided a free height (h) of the cylindrical section (30), not occupied by other components.

8. Steering column (1) according to one of the preceding claims, **characterized in that** the sliding capsule (3) has a collar section (32), which is arranged on the side of the mounting support (2) facing the chassis for the connecting of the sliding capsule (3) to the chassis of the motor vehicle and between a bottom side (34) of the collar section (32) and the retaining ring (4) a defined clamping force is exerted on the mounting support (2), which determines the breakaway force.

9. Steering column (1) according to one of the preceding claims, **characterized in that** the surface of the sliding capsule (3) is coated with a surface layer or has been subjected to a special surface treatment.

10. Method for production of a steering column (1) according to one of the preceding claims,
**characterized in that**
a cylindrical section (30) of a sliding capsule (3) is arranged in an open elongated hole (22) of a mounting support (2) and a retaining ring (4) is pressed with a predetermined press-on force (F) onto the cylindrical part (30) of the sliding capsule (3).

## Revendications

1. Colonne de direction (1) pour un véhicule automobile, comprenant un support de montage (2) avec au moins un trou oblong ouvert (22) et au moins une capsule coulissante (3) disposée dans le trou oblong ouvert (22) et pouvant être fixée sur le châssis du véhicule automobile pour retenir le support de montage (2), le support de montage (2), en cas de collision, pouvant être déplacé par rapport à la capsule coulissante (3) fixée au châssis du véhicule automobile et la capsule coulissante (3) présentant une portion cylindrique (30) qui s'étend à travers le trou oblong ouvert (22),
**caractérisée en ce que**
le support de montage (2) est retenu sur la capsule coulissante (3) au moyen d'une bague de retenue (4) pressée sur la portion cylindrique (30) .

2. Colonne de direction (1) selon la revendication 1, **caractérisée en ce que** la bague de retenue (4) est pressée avec une force de pressage prédéfinie (F) sur la portion cylindrique (30).

3. Colonne de direction (1) selon la revendication 1 ou 2, **caractérisée en ce que** la bague de retenue (4) est pressée du côté du support de montage (2) opposé au châssis sur la portion cylindrique (30) de la capsule coulissante (3).

4. Colonne de direction (1) selon l'une quelconque des revendications précédentes, **caractérisée en ce qu'**entre la bague de retenue (4) et le support de montage (2) est disposée une rondelle (5).

5. Colonne de direction (1) selon l'une quelconque des revendications précédentes, **caractérisée en ce que** la bague de retenue (4) fournit une force d'arrachement définie du support de montage (2) par rapport à la capsule coulissante (3).

6. Colonne de direction (1) selon l'une quelconque des revendications précédentes, **caractérisée en ce que** la portion cylindrique (30) de la capsule coulissante (3) présente une étendue axiale qui est supérieure à une combinaison de l'épaisseur de matériau (d) du support de montage (2) et de la hauteur axiale de la bague de retenue pressée (4), et, en présence d'une rondelle (5), de l'épaisseur de matériau de la rondelle (5).

7. Colonne de direction (1) selon l'une quelconque des revendications précédentes, **caractérisée en ce qu'**entre une extrémité inférieure (36) de la portion cylindrique (30) et la bague de retenue (4) est prévue une hauteur libre (h) de la portion cylindrique (30) qui n'est pas pourvue d'autres composants.

8. Colonne de direction (1) selon l'une quelconque des revendications précédentes, **caractérisée en ce que** la capsule coulissante (3) présente une portion de bride (32) qui est disposée du côté du support de montage (2) tourné vers le châssis pour relier la capsule coulissante (3) au châssis du véhicule automobile et entre un côté inférieur (34) de la portion de bride (32) et la bague de retenue (4), une force de serrage définie est exercée sur le support de montage (2), laquelle définit la force d'arrachement.

9. Colonne de direction (1) selon l'une quelconque des revendications précédentes, **caractérisée en ce que** la surface de la capsule coulissante (3) est revêtue d'une couche superficielle ou a été soumise à un traitement de surface spécial.

10. Procédé de fabrication d'une colonne de direction (1) selon l'une quelconque des revendications précédentes, **caractérisé en ce qu'**une portion cylindrique (30) d'une capsule coulissante (3) est disposée dans un trou oblong ouvert (22) d'un support de montage (2) et une bague de retenue (4) est pressée avec une force de pressage prédéfinie (F) sur la partie cylindrique (30) de la capsule coulissante (3).
